# EUROPÄISCHE PATENTSCHRIFT

(11) **EP 3 100 895 B1**
(45) Veröffentlichungstag und Bekanntmachung des Hinweises auf die Patenterteilung: **22.08.2018**
(21) Anmeldenummer: 16171469.6
(22) Anmeldetag: 26.05.2016
(51) Int. Cl.: B60K 37/06

(54) **VERFAHREN UND INFORMATIONSSYSTEM ZUR INFORMATION EINES FAHRZEUGFÜHRERS EINES FAHRZEUGS HINSICHTLICH DER VERFÜGBARKEIT EINER KOMMUNIKATIONSVERBINDUNG**
METHOD AND INFORMATION SYSTEM FOR PROVIDING A VEHICLE DRIVER WITH INFORMATION ABOUT THE AVAILABILITY OF A COMMUNICATION LINK
PROCEDE ET SYSTEME D'INFORMATIONS DESTINES A UN CONDUCTEUR DE VEHICULE AUTOMOBILE CONCERNANT LA DISPONIBILITE D'UNE LIAISON DE COMMUNICATION

(30) Priorität: 30.05.2015 DE 102015007115
(43) Veröffentlichungstag der Anmeldung: 07.12.2016
(73) Patentinhaber: Volkswagen AG, 38440 Wolfsburg (DE)
(72) Erfinder: Gerlach, Matthias, 14469 Potsdam (DE); Titze, Jan, 38114 Braunschweig (DE)

(56) Entgegenhaltungen:
- US-A1- 2014 129 092

## Beschreibung

Die Erfindung betrifft ein Verfahren und ein Informationssystem zur Information eines Fahrzeugführers eines Fahrzeugs hinsichtlich der Verfügbarkeit einer Kommunikationsverbindung sowie ein Fahrzeug und ein Computerprogrammprodukt.

In Fahrzeugen, wie zum Beispiel PKWs, LKWs oder auch Motorrädern, werden vermehrt Kommunikationsfähigkeiten verbaut, die unterschiedliche Funktionen ermöglichen. Der Fahrer wird üblicherweise über eine Anzeige im Display einer Kommunikationseinheit oder eines Navigationssystems über den Verbindungsstatus informiert.

Der Erfindung liegt die Aufgabe zugrunde, die Integration von Kommunikationsverbindungen zu verbessern.

Diese Aufgabe wird gelöst durch ein Verfahren gemäß Anspruch1, ein Informationssystem gemäß Anspruch 7, ein Fahrzeug gemäß Anspruch 10 beziehungsweise ein Computerprogrammprodukt gemäß Anspruch 11.

Das erfindungsgemäße Verfahren zur Information eines Fahrzeugführers eines Fahrzeugs hinsichtlich der Verfügbarkeit einer Kommunikationsverbindung des Fahrzeugs mit einer externen Kommunikationseinheit, sieht vor, dass eine erste Dienstkategorie und eine zweite Dienstkategorie vorgesehen sind, welche die Kommunikationsverbindung nutzen, dass die Verfügbarkeit der Kommunikationsverbindung für beide Dienstkategorien geprüft wird und dass das Ergebnis der Verfügbarkeitsprüfung dem Fahrzeugführer für beide Dienstkategorien graphisch in einem Symbol dargestellt wird.

Das erfindungsgemäße Verfahren hat den Vorteil, dass auf einfache Art und Weise unterschiedliche Dienste und/oder Kommunikationswege gemeinsam in einem Symbol oder Icon dargestellt werden können. Es wird eine kompakte Darstellung eines konplexen Zusammenhangs für eine neue Art von Produkt, sogenannte bunte (Infotainment) und graue (Remote) Dienste in einem Fahrzeug ermöglicht. Unter der Verfügbarkeit einer Kommunikationsverbindung wird hier sowohl die physikalische Verbindung wie zum Beispiel ein Funkkanal einer Telekommunikationsverbindung als auch eine logische Verbindung wie zum Beispiel eine unter Umständen passwortgeschützte Zugangsberechtigung oder eine zu bezahlende Funktionalität verstanden. Entsprechend kann die Prüfung der Verfügbarkeit beide Komponenten, das heißt die physikalische und die logische Konnektivität umfassen. Da für den Fahrer diese Details nicht bekannt oder zumindest auf den ersten Blick nicht relevant sind, wird hier eine Informationsreduktion durchgeführt, welche die Sicherheit und den Bedienkomfort erhöhen kann. Die Informationsreduktion wird weiter verbessert durch die Darstellung der Ergebnisse für beide Dienstkategorien graphisch in einem Symbol.

Zwei Kommunikationsverbindungen können vorgesehen sein, wobei die erste Dienstkategorie eine erste der zwei Kommunikationsverbindungen nutzt und wobei die zweite Dienstkategorie eine zweite der zwei Kommunikationsverbindungen nutzt. Zum Beispiel aus organisatorischen Gründen oder aus Sicherheitsgründen können zwei oder mehr Kommunikationsverbindungen vorgesehen sein, um die Dienstkategorien voneinander zu trennen. Das Verfahren eignet sich insbesondere für derartige Konstellationen, da mehrere Kanäle getrennt voneinander verarbeitet werden können, das heißt getrennt voneinander überprüft und dann gemeinsam in einem Symbol dargestellt werden können.

Eine der zwei Kommunikationsverbindungen kann über eine mobile Kommunikationseinheit, wie zum Beispiel ein Mobiltelefon oder Tablet, verlaufen. Insbesondere persönliche oder personifizierte Zusatzdienste zum Beispiel für die Funktionen Navigation oder Unterhaltung können aus Gründen der Sicherheit und wegen Abrechnungsmodalitäten über ein Mobiltelefon des Fahrers in das Fahrzeug eingebunden werden. Dazu ist das Mobiltelefon über eine Datenverbindung wie zum Beispiel Bluetooth, WLAN oder USB mit dem Fahrzeug, meist einem Steuergerät des Fahrzeugs verbunden. Auch eine derartige Verbindung kann auf Verfügbarkeit getestet und das Ergebnis dargestellt werden.

Die erste Dienstkategorie kann Infotainmentfunktionen zur Verfügung stellen. Dies umfasst zum Beispiel typische Internetfunktionen wie browsen, optionale Bilddarstellungen im Navigationssystem oder persönliche Navigationspunkte (POI, Points Of Interest). In dem Symbol oder Icon zur Darstellung der Verfügbarkeit der ersten Dienstkategorie kann entsprechend der Buchstabe I verwendet werden, der zum Beispiel farbig oder voll dargestellt ist bei Verfügbarkeit oder ausgegraut oder ausgeblendet ist, wenn keine Verfügbarkeit gegeben ist. Typischerweise gehen derartige Infotainmentfunktionen von dem Benutzer oder Fahrer des Fahrzeugs aus, werden also meist fahrzeugintern gestartet.

Die zweite Dienstkategorie kann Remotefunktionen zur Verfügung stellen. Dies umfasst zumeist Dienste, die von extern über das Mobiltelefon des Fahrers gesteuert werden, wie zum Beispiel die Abfrage des Tankinhalts, Remote Battery Charging (Fernsteuerung des Ladezustands bei einem Hybrid- oder Elektrofahrzeug), Geo Fencing (Einreichten eines virtuellen Zauns oder Gebiets) und so weiter. In dem Symbol oder Icon zur Darstellung der Verfügbarkeit der ersten Dienstkategorie kann entsprechend der Buchstabe R verwendet werden, der zum Beispiel farbig oder voll dargestellt ist bei Verfügbarkeit oder ausgegraut oder ausgeblendet ist, wenn keine Verfügbarkeit gegeben ist. Typischerweise gehen derartige Infotainmentfunktionen von dem Benutzer oder Fahrer außerhalb des Fahrzeugs aus, werden also meist fahrzeugextern gestartet. Die Anzeige der Verfügbarkeit dieses Dienstes oder dieser Dienstkategorie im Fahrzeug erlaubt dem Fahrer eine Vorschau, ob diese Dienste bei Verlassen des Fahrzeuges zur Verfügung stehen werden.

Die erste Dienstkategorie kann fahrzeugintern initiiert werden und die zweite Dienstkategorie kann fahrzeugextern initiiert werden. Damit werden alle Möglichkeiten eine Verbindung aufzubauen umfasst und in einem Symbol dargestellt. Somit ist eine vollständige Abdeckung der Dienste gegeben. Eine bildliche Darstellung kann einen ausgehenden Pfeil für fahrzeugintern initiierte Dienst und einen eingehenden Pfeil für fahrzeugextern initiierte Dienste umfassen.

Das erfindungsgemäße Informationssystem für ein Fahrzeug zur Information eines Fahrzeugführers eines Fahrzeugs hinsichtlich der Verfügbarkeit einer Kommunikationsverbindung des Fahrzeugs mit einer externen Kommunikationseinheit für eine erste Dienstkategorie und eine zweite Dienstkategorie, umfasst, dass Einheiten vorgesehen sind, die ausgebildet sind, um die Schritte des zuvor beschriebenen Verfahrens durchzuführen. Es gelten die gleichen Vorteile und Modifikationen wie zuvor beschrieben.

Eine berührungsempfindliche Anzeige kann vorgesehen sein, die eingerichtet ist zur graphischen Darstellung des Ergebnisses der Verfügbarkeitsprüfung in Form eines Symbols und bei einer Berührung des Symbols zur Darstellung weiterer Informationen betreffend die Kommunikationsverbindung und/oder die Dienstkategorien. Dadurch kann bei Bedarf die Detailreduktion wieder aufgelöst werden und Details zu den Verbindungen, Diensten beziehungsweise deren Verfügbarkeiten angegeben werden. Zum Beispiel kann detailliert der Grund angezeigt werden, wenn eine Verbindung, eine Dienstkategorie und/oder ein einzelner Dienst einer Dienstkategorie nicht verfügbar ist.

Eine Anzeige eines Infotainmentsystems und ein Steuergerät können vorgesehen sein zur Ausführung des zuvor beschriebenen Verfahrens. So können bereits bestehende Komponenten genutzt werden, was die Einführung des Verfahrens vereinfacht.

Das erfindungsgemäße Fahrzeug umfasst ein Informationssystem wie zuvor beschrieben. Es gelten die gleichen Vorteile und Modifikationen wie zuvor beschrieben.

Das erfindungsgemäße Computer-Programmprodukt umfasst Programmcode zur Durchführung des zuvor beschriebenen Verfahrens, wenn das Programmprodukt auf einer Vorrichtung oder einem Informationssystem ausgeführt wird. Es gelten die gleichen Vorteile und Modifikationen wie zuvor beschrieben.

Die Erfindung wird nachfolgend in Ausführungsbeispielen anhand der zugehörigen Zeichnungen erläutert. Es zeigen:
- Figur 1: ein Blockschaltbild eines Informationssystems gemäß einem ersten Ausführungsbeispiel der Erfindung.
- Figur 2: ein Blockschaltbild eines Informationssystems gemäß einem zweiten Ausführungsbeispiel der Erfindung.
- Figur 3: eine beispielhafte Darstellung einer Anzeige eines Informationsgerät.
- Figur 4: beispielhafte Darstellungen eines Icons zur Anzeige des Ergebnisses der Verfügbarkeitsprüfung.

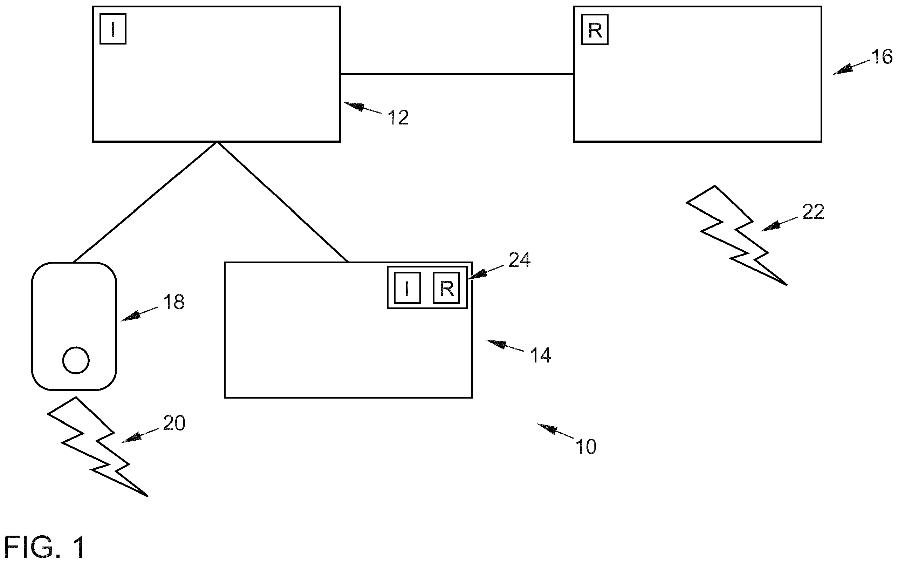

Figur 1 zeigt ein Informationssystem 10 für ein Fahrzeug. Das Informationssystem 10 umfasst ein Steuergerät 12, auch Head Unit genannt, für Infotainmentfunktionen oder -dienste. Diese Funktionen umfassen unter anderem Navigationsdienste und Audio- und/oder Videowiedergabe. Das Steuergerät 12 kann auch ein isoliertes Steuergerät für eine der Funktionen, zum Beispiel Navigation sein.

Weiterhin ist eine Anzeige 14 vorgesehen, die mit dem Steuergerät 12 kommuniziert, um Daten aus dem Steuergerät 12 auf der Anzeige 14 darzustellen. Die Anzeige 14 stellt zum Beispiel Navigationsdaten, Audiodaten und/oder Informationen betreffend das Fahrzeug dar. Die Anzeige 14 kann berührungs- oder näherungsempfindlich sein, so dass auch Eingaben über die Anzeige 14 erfolgen können. Die Anzeige 14 und das Steuergerät 12 können eine Einheit sein.

Ein Telematik-Steuergerät 16 ist mit dem Steuergerät 12 verbunden, zum Beispiel über ein Bussystem wie CAN. Darauf setzt ein Kommunikationsprotokoll auf, das den Datenaustausch zwischen den beiden Geräten ermöglicht, wie zum Beispiel BAP (Bedien-Anzeige-Protokoll). Das Telematik-Steuergerät 16 ist für Telematik-Funktionen wie zum Beispiel Remote-Dienste zuständig. Remote Dienste setzen voraus, dass das Fahrzeug erreichbar ist und werden zum Beispiel von einem Mobiltelefon außerhalb des Fahrzeugs ausgelöst. Derartige Remote Dienste umfassen zum Beispiel Remote Battery Charging - Fernsteuerung des Batterieladens oder Geo Fencing - Virtueller Zaun.

Mit Geofencing ist die Definition einer virtuellen Begrenzung und das automatisierte Auslösen einer Aktion durch das Überschreiten der Begrenzung auf der Erdoberfläche bezeichnet. In den meisten Fällen definiert die Begrenzung eine geschlossene Fläche, so dass zwischen innen und außen unterschieden werden kann. Beispielsweise kann beim Eintritt in die Fläche oder beim Verlassen der Fläche eine Benachrichtigung ausgelöst werden. Das beobachtete Objekt muss dazu in regelmäßigen Abständen seine Position senden oder die Abfrage seiner Position von außen ermöglichen. Diese Ortsbestimmung kann über das Mobilfunksystem auf Funkzellenebene oder koordinatenbezogen über ein Navigationssatellitensystem erfolgen. Dies erlaubt zum Beispiel die Überwachung des Einsatzgebietes von Fahrzeugen, zum Beispiel einer Firmenflotte oder von Mietwagen. Bei Mietwagen wird mit Hilfe von Geofencing sichergestellt, dass die Fahrzeuge nur im Inland verwendet werden.

Auf der Anzeige 14 sind auch Funktionen oder Daten des Telematik-Steuergeräts 16 darstellbar.

Eine mobile Kommunikationseinheit 18 des Fahrers oder eines Beifahrers befindet sich innerhalb des Fahrzeugs und kommuniziert mit dem Steuergerät 12. Dazu sind die beiden Einheiten zum Beispiel über WLAN, USB oder Bluetooth miteinander verbunden. Die mobile Kommunikationseinheit 18, zum Beispiel ein Smartphone oder Tablet, schafft einen Gateway oder eine erste Kommunikationsverbindung 20 für Daten zwischen dem Fahrzeug, wie zum Beispiel einem Infotainment- oder Navigationssystem 12 und einer externen Kommunikationseinheit, wie zum Beispiel einem Webserver.

Über die erste Kommunikationsverbindung 20 wird eine erste Dienstkategorie implementiert oder zur Verfügung gestellt. Die erste Dienstkategorie wird hier als Infotainment bezeichnet und stellt Infotainmentdienste oder -funktionen wie zum Beispiel eine typische Internet-Nutzung mit Internet browsen, Street-View, Personal POIs zur Verfügung. Infotainment-Dienste werden typischerweise aus dem Fahrzeug heraus, das heißt fahrzeugintern, getriggert oder initiiert.

Über eine zweite Kommunikationsverbindung 22 ist das Fahrzeug, beziehungsweise das Telematik-Steuergerät 16, mit einer weiteren externen Kommunikationseinheit wie zum Beispiel dem Backend des Fahrzeugherstellers verbunden. Über die zweite Kommunikationsverbindung 22 wird eine zweite Dienstkategorie implementiert oder zur Verfügung gestellt. Die zweite Dienstkategorie wird hier als Remote bezeichnet und stellt Remotedienste oder -funktionen zur Verfügung. Remote-Dienste werden typischerweise von außerhalb des Fahrzeuges, das heißt fahrzeugextern, getriggert oder initiiert. Diese Initiierung kann durch das Smartphone des Fahrers oder durch das Backend erfolgen.

Die beiden Dienstkategorien nutzen verschiedene Kommunikationsverbindungen 20, 22 mit unterschiedlichen physikalischen Kanälen und logischen Eigenschaften oder Protokollen. Zur Nutzung der Dienste ist eine Verfügbarkeit der jeweiligen Verbindung erforderlich. Um dem Fahrer den Status der beiden Kommunikationsverbindungen 20, 22 anzuzeigen, werden zunächst beide Verfügbarkeiten überprüft. Dies umfasst neben der rein physikalischen Verbindungsprüfung auch eine logische Verbindungprüfung, zum Beispiel von Zugangsberechtigungen, Passwörtern, dem Vorhandensein von Verbindungskontingenten und ähnlichem.

Das Ergebnis der Prüfung wird dem Fahrer in einem einzigen Symbol oder Icon 24 auf der Anzeige 14 dargestellt. Oft sind dem Fahrer die unterschiedlichen Kommunikationsverbindungen 20, 22 nicht bewusst oder bekannt, so dass die Darstellung in einem Symbol von an sich getrennten Kommunikationsverbindungen 20, 22 die Komplexität für den Fahrer verringert. Zudem findet eine Entlastung des Fahrers durch Informationsreduktion statt, da lediglich das Ergebnis zweier komplexer Verbindungsprüfung in einem Symbol dargestellt wird. Die Darstellung kann zum Beispiel durch die Buchstaben I (Infotainmentdienste) und R (Remotedienste) erfolgen. Ein voller oder dargestellter Buchstabe kann dann eine Verfügbarkeit anzeigen, während ein ausgegrauter oder nicht voll dargestellter Buchstabe keine Verfügbarkeit anzeigt.

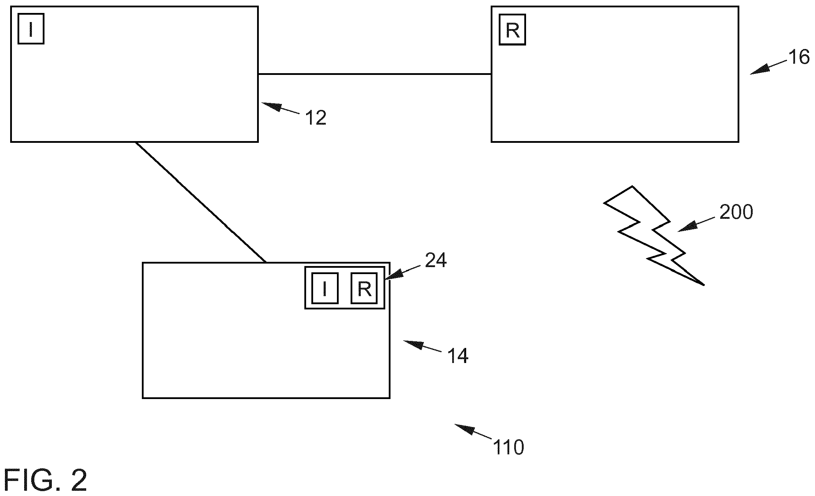

Figur 2 zeigt ein weiteres Ausführungsbeispiel eines Informationssystems 110, das im Aufbau dem Informationssystem 10 aus Figur 1 ähnelt. Hier sind die erste und zweite Kommunikationsverbindung 20 und 22 in einer Kommunikationsverbindung 200 zusammengefasst. Die Kommunikationsverbindung 200 geht von dem Telematik-Steuergerät 16 aus. Beide Dienstkategorien I, R nutzen hier die gemeinsame Kommunikationsverbindung 200. Daten aus oder zu dem Steuergerät 12 werden dabei über das Telematik-Steuergerät 16 übertragen. Der Begriff identische Kommunikationsverbindung 200 umfasst hier hauptsächlich den identischen Kommunikationsendpunkt am Fahrzeug. Der oder die anderen Kommunikationsendpunkte können unterschiedlich sein, wie zum Beispiel Backend und Webserver. Entsprechend sind auch bei diesem Ausführungsbeispiel die Verfügbarkeiten beider Dienstkategorien beziehungsweise ihrer vollständigen Kommunikationsverbindungen zu prüfen.

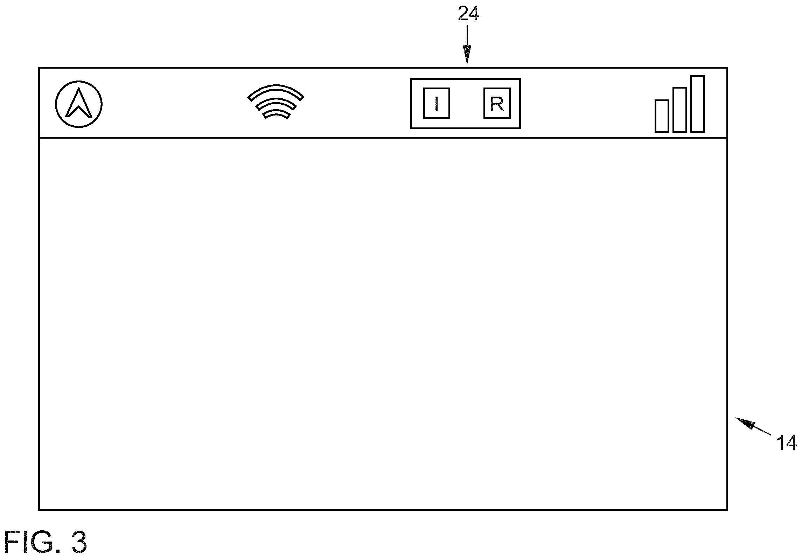

In Figur 3 ist beispielhaft eine Bildschirmdarstellung der Anzeige 14 dargestellt. In einer oberen Statusleiste ist das Symbol 24 zur Darstellung der Ergebnisse der beiden Verfügbarkeitsprüfungen für die beiden Dienstkategorien I, R beziehungsweise ihrer Kommunikationsverbindungen dargestellt. So ist für den Fahrer auf einen Blick der Status der Dienstverfügbarkeit erkennbar. Bei Betätigung des Symbols kann ein Menü oder eine Informationseinheit mit Detailinformationen bezüglich der Dienste und/oder ihrer Verfügbarkeit geöffnet werden.

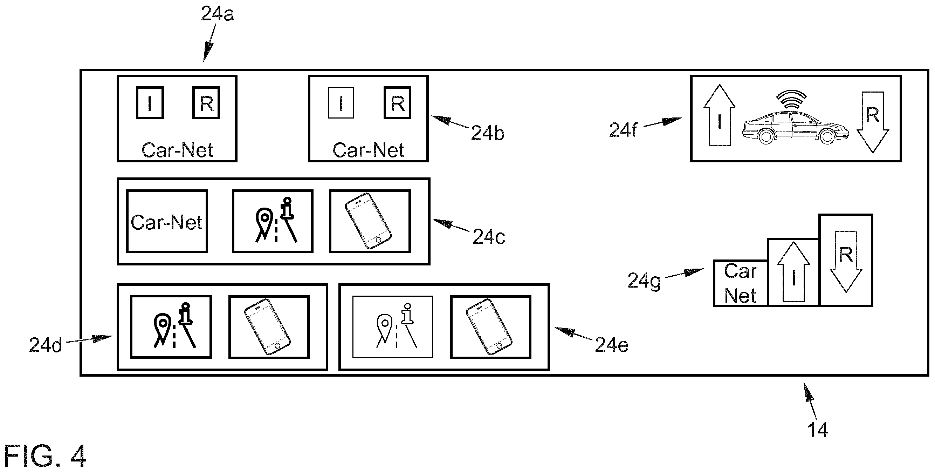

In Figur 4 sind beispielhaft mehrere Symbole 24 zur Darstellung in der Anzeige 14 dargestellt. Das Symbol oder Icon 24a zeigt die Verfügbarkeit beider Dienste I, R an, während das Symbol 24b die Verfügbarkeit des Dienstes R und die Nichtverfügbarkeit des Dienstes I anzeigt. Zudem wird in einem Schriftzug, hier beispielhaft Car-Net, das Gesamtsystem, in dem die beiden Dienstkategorien eingebettet sind, bezeichnet.

Das Symbol 24c zeigt eine weitere beispielhafte Darstellung einer Verfügbarkeit beider Dienste sowie die Bezeichnung des Gesamtsystems. Die mittlere, straßenähnliche Darstellung symbolisiert die Dienstkategorie I. Die rechte Darstellung eines stilisierten Mobiltelefons symbolisiert die Dienstkategorie R.

Die Symbole 24d und 24e zeigen weitere Darstellungen, wobei gemäß Symbol 24d beide Dienstkategorien I und R verfügbar sind, während gemäß Symbol 24e nur die Dienstkategorie R verfügbar ist.

Das Symbol 24f symbolisiert als ausgehenden Pfeil, die hier verfügbare Dienstkategorie I. Der ausgehende Pfeil ist gewählt, da Verbindungen der Dienstkategorie Infotainment ihren Ursprung innerhalb des Fahrzeugs haben. Das Symbol 24f symbolisiert als eingehenden Pfeil, die hier verfügbare Dienstkategorie R. Der eingehende Pfeil ist gewählt, da Verbindungen der Dienstkategorie Remote ihren Ursprung außerhalb des Fahrzeugs haben. Die Begriffe eingehend und ausgehend beziehen sich auf das Fahrzeug, das zur Verdeutlichung zwischen den beiden Pfeilen angeordnet ist

Das Symbol 24g zeigt eine weitere Darstellung der Verfügbarkeit der beiden Dienstkategorien I und R in einem einzigen Symbol. Hier sind beide Dienstkategorien verfügbar, was dadurch gekennzeichnet ist, dass beide Pfeile nicht ausgegraut sondern in voller Farbe dargestellt sind.

### Bezugszeichenliste

- 10, 110: Informationssystem
- 12: Steuergerät
- 14: Anzeige
- 16: Telematik-Steuergerät
- 18: mobile Kommunikationseinheit
- 20: erste Kommunikationsverbindung
- 22: zweite Kommunikationsverbindung
- 24: Symbol
- 200: Kommunikationsverbindung
- I: erste Dienstkategorie
- R: zweite Dienstkategorie

## Patentansprüche

1. Verfahren zur Information eines Fahrzeugführers eines Fahrzeugs hinsichtlich der Verfügbarkeit einer Kommunikationsverbindung (200) des Fahrzeugs mit einer externen Kommunikationseinheit, **dadurch gekennzeichnet, dass** eine erste Dienstkategorie (I) und eine zweite Dienstkategorie (R) vorgesehen sind, welche die Kommunikationsverbindung (200) nutzen, dass die Verfügbarkeit der Kommunikationsverbindung (200) für beide Dienstkategorien (I, R) geprüft wird und dass das Ergebnis der Verfügbarkeitsprüfung dem Fahrzeugführer für beide Dienstkategorien (I, R) graphisch in einem Symbol (24) dargestellt wird.

2. Verfahren nach Anspruch 1, **dadurch gekennzeichnet, dass** zwei Kommunikationsverbindungen (20, 22) vorgesehen sind, wobei die erste Dienstkategorie (I) eine erste (20) der zwei Kommunikationsverbindungen nutzt und wobei die zweite Dienstkategorie (R) eine zweite (22) der zwei Kommunikationsverbindungen nutzt.

3. Verfahren nach Anspruch 2, **dadurch gekennzeichnet, dass** eine (20) der zwei Kommunikationsverbindungen über eine mobile Kommunikationseinheit (18) verläuft.

4. Verfahren nach einem der vorhergehenden Ansprüche, **dadurch gekennzeichnet, dass** die erste Dienstkategorie (I) Infotainmentfunktionen zur Verfügung stellt.

5. Verfahren nach einem der vorhergehenden Ansprüche, **dadurch gekennzeichnet, dass** die zweite Dienstkategorie (R) Remotefunktionen zur Verfügung stellt.

6. Verfahren nach einem der vorhergehenden Ansprüche, **dadurch gekennzeichnet, dass** die erste Dienstkategorie (I) fahrzeugintern initiiert wird und dass die zweite Dienstkategorie (R) fahrzeugextern initiiert wird.

7. Informationssystem für ein Fahrzeug zur Information eines Fahrzeugführers eines Fahrzeugs hinsichtlich der Verfügbarkeit einer Kommunikationsverbindung (20, 22, 200) des Fahrzeugs mit einer externen Kommunikationseinheit für eine erste Dienstkategorie (I) und eine zweite (R) Dienstkategorie, **dadurch gekennzeichnet, dass** Einheiten (12, 14, 16) vorgesehen sind, die ausgebildet sind, um die Schritte eines Verfahrens gemäß einem der Ansprüche 1 bis 6 durchzuführen.

8. Informationssystem nach Anspruch 7, **dadurch gekennzeichnet, dass** eine berührungsempfindliche Anzeige vorgesehen ist, die eingerichtet ist zur graphischen Darstellung des Ergebnisses der Verfügbarkeitsprüfung in Form eines Symbols (24) und bei einer Berührung des Symbols (24) zur Darstellung weiterer Informationen betreffend die Kommunikationsverbindung (20, 22, 200) und/oder die Dienstkategorien (I, R).

9. Informationssystem nach Anspruch 7 oder 8, **dadurch gekennzeichnet, dass** eine Anzeige (14) eines Infotainmentsystems und ein Steuergerät (12) vorgesehen sind zur Ausführung des Verfahrens gemäß einem der Ansprüche 1 bis 6.

10. Fahrzeug, umfassend ein Informationssystem (10) nach einem der Ansprüche 7 bis 9.

11. Computer-Programmprodukt mit Programmcode zur Durchführung des Verfahrens nach einem der Ansprüche 1 bis 6, wenn das Programmprodukt auf einer Vorrichtung oder einem Informationssystem (10) ausgeführt wird.

## Claims

1. Method for informing a vehicle driver of a vehicle about the availability of a communication connection (200) from the vehicle to an external communication unit, **characterized in that** a first service category (I) and a second service category (R) are provided that use the communication connection (200), **in that** the availability of the communication connection (200) is checked for the two service categories (I, R) and **in that** the result of the availability check is graphically depicted for the vehicle driver for the two service categories (I, R) in a symbol (24).

2. Method according to Claim 1, **characterized in that** two communication connections (20, 22) are provided, wherein the first service category (I) uses a first (20) of the two communication connections and wherein the second service category (R) uses a second (22) of the two communication connections.

3. Method according to Claim 2, **characterized in that** one (20) of the two communication connections is routed via a mobile communication unit (18).

4. Method according to one of the preceding claims, **characterized in that** the first service category (I) provides infotainment functions.

5. Method according to one of the preceding claims, **characterized in that** the second service category (R) provides remote functions.

6. Method according to one of the preceding claims, **characterized in that** the first service category (I) is initiated internally to the vehicle and **in that** the second service category (R) is initiated externally to the vehicle.

7. Information system for a vehicle for informing a vehicle driver of a vehicle about the availability of a communication connection (20, 22, 200) from the vehicle to an external communication unit for a first service category (I) and a second (R) service category, **characterized in that** units (12, 14, 16) are provided that are configured to perform the steps of a method according to one of Claims 1 to 6.

8. Information system according to Claim 7, **characterized in that** a touch-sensitive display is provided that is set up to graphically depict the result of the availability check in the form of a symbol (24) and, when the symbol (24) is touched, to depict further information relating to the communication connection (20, 22, 200) and/or the service categories (I, R).

9. Information system according to Claim 7 or 8, **characterized in that** a display (14) of an infotainment system and a controller (12) are provided to carry out the method according to one of Claims 1 to 6.

10. Vehicle, comprising an information system (10) according to one of Claims 7 to 9.

11. Computer program product having program code for performing the method according to one of Claims 1 to 6 when the program product is executed on an apparatus or an information system (10).

## Revendications

1. Procédé d'information d'un conducteur de véhicule d'un véhicule à propos de la disponibilité d'une liaison de communication (200) du véhicule avec une unité de communication externe, **caractérisé en ce qu'**il existe une première catégorie de services (I) et une deuxième catégorie de services (R) qui utilisent la liaison de communication (200), **en ce que** la disponibilité de la liaison de communication (200) pour les deux catégories de services (I, R) est vérifiée et **en ce que** le résultat de la disponibilité est représenté au conducteur de véhicule sous forme graphique dans un symbole (24) pour les deux catégories de services (I, R).

2. Procédé selon la revendication 1, **caractérisé en ce qu'**il existe deux liaisons de communication (20, 22), la première catégorie de services (I) employant une première (20) des deux liaisons de communication et la deuxième catégorie de services (R) employant une deuxième des deux liaisons de communication.

3. Procédé selon la revendication 2, **caractérisé en ce que** l'une (20) des deux liaisons de communication se déroule par le biais d'une unité de communication mobile (18).

4. Procédé selon l'une des revendications précédentes, **caractérisé en ce que** la première catégorie de services (I) met à disposition des fonctions d'infodivertissement.

5. Procédé selon l'une des revendications précédentes, **caractérisé en ce que** la deuxième catégorie de services (R) met à disposition des fonctions à distance.

6. Procédé selon l'une des revendications précédentes, **caractérisé en ce que** la première catégorie de services (I) est initiée à l'intérieur du véhicule et **en ce que** la deuxième catégorie de services (R) est initiée à l'extérieur du véhicule.

7. Système d'information pour un véhicule destiné à informer un conducteur de véhicule d'un véhicule à propos de la disponibilité d'une liaison de communication (20, 22, 200) du véhicule avec une unité de communication externe pour une première catégorie de services (I) et une deuxième catégorie de services (R), **caractérisé en ce qu'**il existe des unités (12, 14, 16) qui sont configurées pour exécuter les étapes d'un procédé selon l'une des revendications 1 à 6.

8. Système d'information selon la revendication 7, **caractérisé par** la présence d'un écran tactile qui est conçu pour représenter sous forme graphique le résultat d'un contrôle de disponibilité sous la forme d'un symbole (24) et, lors d'un effleurement du symbole (24), pour représenter des informations supplémentaires concernant la liaison de communication (20, 22, 200) et/ou les catégories de services (I, R).

9. Système d'information selon la revendication 7 ou 8, **caractérisé par** la présence d'un écran (14) d'un système d'infodivertissement et d'un contrôleur (12) destinés à mettre en oeuvre un procédé selon l'une des revendications 1 à 6.

10. Véhicule, comportant un système d'information (10) selon l'une des revendications 7 à 9.

11. Produit de programme informatique comprenant un code de programme destiné à mettre en oeuvre un procédé selon l'une des revendications 1 à 6 lorsque le produit de programme est exécuté sur un dispositif ou un système d'information (10).
